# EUROPÄISCHE PATENTSCHRIFT

(11) **EP 0 835 291 B1**
(45) Veröffentlichungstag und Bekanntmachung des Hinweises auf die Patenterteilung: **11.09.2002**
(21) Anmeldenummer: 96923892.2
(22) Anmeldetag: 22.06.1996
(51) Int. Cl.: C09D 7/00

(54) **FLÜSSIGKONFEKTIONIERUNG VON VERDICKUNGSMITTELN**
PRODUCTION OF THICKENING AGENTS IN LIQUID STATE
PRODUCTION D'EPAISSISSANTS A L'ETAT LIQUIDE

(30) Priorität: 30.06.1995 DE 19523837
(43) Veröffentlichungstag der Anmeldung: 15.04.1998
(73) Patentinhaber: Cognis Deutschland GmbH & Co. KG, 40589 Düsseldorf (DE)
(72) Erfinder: CONRADI, Joachim, D-40589 Düsseldorf (DE); GRESS, Wolfgang, D-42111 Wuppertal (DE); NEUMANN, Ralf, D-42781 Haan (DE); SCHIEFERSTEIN, Ludwig, D-40882 Ratingen (DE); SCHULTE, Heinz-Günther, D-45481 Mülheim (DE)
(86) Internationale Anmeldenummer: EP9602721
(87) Internationale Veröffentlichungsnummer: WO97002325

(56) Entgegenhaltungen:
- WO-A-95/12650
- DATABASE WPI Week 9409 Derwent Publications Ltd., London, GB; AN 94072138 XP002017230 & JP,A,06 025 597 (TOYOTA JIDOSHA) , 1.Februar 1994

## Beschreibung

### Gebiet der Erfindung

Die Erfindung betrifft Hilfsmittel zur Flüssigkonfektionierung wäßriger Verdickungsmittel, insbesondere auf Polyurethanbasis, sowie damit hergestellte, wäßrige Verdickungsmittelzubereitungen. Weiterhin betrifft die Erfindung die Verwendung solcher Verdickungsmittelzubereitungen in zu verdickenden Systemen wie beispielsweise wäßrigen Dispersionsfarben.

### Stand der Technik

Verdickungsmittel auf Polyurethanbasis, deren verdickende Eigenschaften sich durch einen assoziativen Wirkmechanismus beschreiben lassen, eignen sich als Hilfsmittel für die Einstellung rheologischer Eigenschaften von wäßrigen Systemen wie beispielsweise Auto- und Industrietacken, Putz- und Anstrichfarben, Druck- und Textilfarben, Pigmentdruckpasten, pharmazeutischen und kosmetischen Zubereitungen, Pflanzenschutzformulierungen sowie Füllstoffdispersionen. Das Wirkprinzip solcher Verdicker ist beispielsweise in ***Polymers Paint Colour Journal,* 181, 270 (1991)** beschrieben. Außer den Polyurethanen lassen sich ebenso ethoxilierte Fettalkohole, die zusätzlich blockweise oder statistisch mit einem geringen Anteil langkettiger Epoxide umgesetzt wurden oder nichtionische Polyacrylate oder Polyacrylamide, die teilweise mit langkettigen Fettalkoholen verestert sind oder auch mit langen Alkylketten veretherte Cellulosederivate, als nach dem assoziativen Mechanismus wirkende Verdicker in wässrigen Systemen einsetzen. In zunehmendem Maße substituieren oder ergänzen sie die traditionell als Verdicker in Farben und Lacken eingesetzten Celluloseether sowie die traditionellen, alkalilöslichen Polyacrylate.
Die assoziativen Verdicker weisen gegenüber den herkömmlichen Verdickersystemen eine Reihe von Vorteilen auf, wie z.B.
- geringere Viskosität beim Einarbeiten,
- geringere Spritzneigung beim Verstreichen,
- besserer Farbverlauf,
- höherer Glanz durch weniger Flokkulation,
- geringere Wasserempfindlichkeit der Beschichtungen,
- geringere Anfälligkeit gegenüber mikrobiellem Befall,
- möglichst geringer Abfall der Viskosität in den verdickten Dispersionen unter Scherung, näherungsweise Newton'sches Fließverhalten

Die Herstellung und Verwendung solcher Verdicker wird beispielsweise in der **US-40 79 028** oder in der **US-44 26 485** beschrieben.

Obwohl die Verdicker auf Polyurethanbasis bei gleicher Verdickungswirkung eine weitaus geringere Eigenviskosität als Potyacrylate oder Celluloseether aufweisen, bereitet die Konfektionierung flüssiger Verdickungsmittelzubereitungen auf Polyurethanbasis immer noch Schwierigkeiten. Die bekannten Polyurethanverdicker besitzen in Form ihrer wäßrigen Lösungen eine sehr hohe Eigenviskosität, die die Einarbeitung in wäßrige Systeme sehr erschwert.

Zur Verringerung der Eigenviskosität der Polyurethanverdicker wurden in der Vergangenheit viele Versuche unternommen. So wurde z.B. das Molekulargewicht verringert, was jedoch eine stark reduzierte Verdickerwirkung zur Folge hatte.

Eine gängige Methode zur Reduzierung der Viskosität wäßriger Polyurethanverdickerlösungen ist die Zugabe wasserlöslicher, niedermolekularer Lösungsmittel wie z.B. wasserlöslichen ein- oder mehrwertigen Alkoholen. Ein gravierender Nachteil dieser Methode sind die Verschlechterung der anwendungstechnischen Eigenschaften, wie beispielsweise Streichfähigkeit oder Stabilität, sowie die erhöhte Emission flüchtiger Lösemittel.

Den geschilderten Nachteilen beim Einsatz niedermolekularer Lösemittel in Verdickungsmittelzubereitungen kann beispielsweise durch Anbieten und Verarbeiten des Verdickungsmittels in der festen Phase entsprochen werden. Die Nachteile einer solchen Konfektionierungsform sind allerdings zusätzliche Prozeßschritte sowohl bei der Herstellung als auch bei der anschließenden Verarbeitung des Verdickers. Im ersten Fall muß der Verdicker aus dem Reaktionsmedium isoliert und in die Pulverform überführt werden, während im letzten Fall das Pulver vor oder während des bestimmungsgemäßen Einsatzes durch Lösen oder Quellung zunächst in eine verarbeitungsgerechte Form überführt werden muß, bevor die endgültige Anwendung möglich ist.

Die Möglichkeit einer Viskositätsreduzierung in den Verdickersystemen durch Zusatz größerer Mengen von Wasser erscheint unwirtschaftlich, da sie mit einer nachteiligen Verringerung der Wirkstoffkonzentration und damit einer erhöhten Dosierung im Anwendungsfall verbunden wäre.

Die DE-A-43 10 702 beschreibt nun, daß zur Verringerung der Viskosität wäßriger Lösungen der Polyurethanverdicker alkoxylierte Alkohole oder Phenole zugesetzt werden können, die jedoch in hohen Konzentrationen verwendet werden müssen, um eine ausreichende Herabsetzung der Eigenviskosität des Verdickers zu erreichen. Die Druckschrift offenbart weiterhin die Verwendung von 2,4,7,9-Tetramethyl-5-decin-4,7-diol als Mittel zur Viskositätssenkung in solchen Verdickersystemem, das in Mengen von bis zu 25 Gew.-% eingesetzt werden muß.

Die **DE-A-36 30 319** beschreibt die Synthese von Verdickem auf Polyurethanbasis, die selbst schon über eine niedrige Eigenviskosität verfügen. Im Dokument wird die Verwendung ethoxylierter Alkohole als "Solubilisator" erwähnt. Als derartige Solubilisatoren sind beispielhaft das Anlagerungsprodukt von 60 mol Ethylenoxid (EO) an 1 mol Talgalkohol sowie das Anlagerungsprodukt von 12 mol EO an Nonylphenol offenbart.

In der **US-4,636,326** wird die Verwendung von Abmischungen bekannter Polyurethanverdicker mit Dimerfettsäureestem in wäßrigen Hydraulikflüssigkeiten offenbart. Die Druckschrift erwähnt die Verwendung nichtionischer Tenside als Hilfsmittel zur Dispersion von Additiven. Eine Verwendung ethoxylierter Fettalkohole zur Verringerung der Viskosität der Hydraulikflüssigkeiten oder die Erwähnung eines solchen Effekts können der Duckschrift nicht entnommen werden.

Aufgabe der Erfindung ist es daher unter Vermeidung der bisher geschilderten Nachteile eine Verdickungsmittelzubereitung zur Verfügung zu stellen, die sich durch eine geringe Eigenviskosität und damit leichte Handhabbarkeit auszeichnet. Gleichzeitig sollen jedoch die ursprünglichen Verdickungseigenschaften bei bestimmungsgemäßer Benutzung in wäßriger Lösung weitgehend erhalten bleiben.

Überraschenderweise wurde nun gefunden, daß schon ein etwa 10 Gew.-%iger Zusatz von Anlagerungsprodukten von 3 bis 7 mol EO und/oder Propylenoxid (PO) an kurzkettige Fett- oder Guerbetalkohole in der Regel die Eigenviskosität wäßriger Zubereitungen von Verdickem soweit verringert, daß die wäßrigen Verdickungsmittelzubereitungen bequem handhabbar sind.

### Beschreibung der Erfindung

Gegenstand der Erfindung ist eine wäßrige Verdickungsmittelzubereitung, mindestens enthaltend ein organisches, wasserdispergierbares oder wasserlösliches, polymeres Verdickungsmittel und ein nichtionisches Tensid als Viskositätssenker, dadurch gekennzeichnet, daß der Viskositätssenker wenigstens eine Verbindung der Formel

R¹-O-(R²-O)ₙ-H (1)

wobei
- R¹ für einen aliphatischen Kohlenwasserstoffrest mit 6 - 10 und insbesondere 8 C-Atomen,
- R² für Alkylenreste mit 2 bis 4 C-Atomen und
- n für eine ganze Zahl zwischen 3 und 7 steht,
umfaßt.

Unter wasserdispergierbaren oder wasserlöslichen Verdickungsmitteln werden insbesondere solche verstanden, die nach dem Assoziativmechanismus wirken Hierzu zählen z.B. die teilweise mit langkettigen Fettalkoholen veretherten Polyacrylate und Polyacrylamide, langkettige Cellulosealkylether und insbesondere die Polyetherpolyurethane.

Die erfindungsgemäß bevorzugten Polyetherpolyurethane stellen im allgemeinen das Reaktionsprodukt von zwei mol Polyetherpolyolen mit je einer OH-Funktion mit einem mol an im Mittel zwei Isocyanatgruppen aufweisenden Molekülen dar.

Als Polyetherpolyole sind beispielsweise die Polymerisationsprodukte des Ethylenoxids, des Propylenoxids und/oder des Butylenoxids, deren Misch oder Pfropfpolymerisationsprodukte sowie die durch Kondensation von mehrwertigen Alkoholen oder Mischungen derselben und die durch Alkoxylierung von ein- oder mehrwertigen Alkoholen, Amiden, Polyamiden und Aminoalkoholen gewonnenen Polyether geeignet. Bevorzugterweise sind diese Polyetherpolyole so stark hydrophil, daß sie wasserlöslich sind. Zur Herstellung von Verdickungsmitteln werden in der Regel solche Potyetherpolyole benutzt, die zumindest überwiegend Polyalkylenglycole, bevorzugt Polyethylenglycole oder Polypropylenglycole enthalten. Die Zahl der im Polyalkylenglycol enthaltenen Polyoxyalkyleneinheiten kann dabei zwischen etwa 20 und etwa 400 schwanken, wobei sich die besten Ergebnisse bezüglich der Handhabbarkeit und der Wirkung bei einem mittleren Polyoxyalkylengruppengehalt von etwa 150 bis 250 erreichen lassen.

Als Isocyanattragendes Molekül kommen sowohl die niedermolekularen, aliphatischen und/oder aromatischen Diisocyanate als auch durch Reaktionen mit bevorzugt zweiwertigen Alkoholen hergestellte, sogenannte "kettenverlängerte" Isocyanate infrage.

Beispielsweise seien als geeignete lsocyanate genannt 1,5 Naphtylendiisocyanat, 4,4-Diphenylmethyndiisocyanat (MDI), hydriertes MDI (H₁₂ MDI), Xylylendiisocyanat (XDI), Tetramethylxyloldiisocyanat (TMXDI), Di- und Tetraalkyldiphenylmethandiisocyanat, 4,4'-Dibenzyldiisocyanat, 1,3-Phenylendiisocyanat, 1,4-Phenylendiisocyanat, die Isomere des Toluylendiisocyanats (TDI), gegebenenfalls in Mischung, 1-Methyl-2,4-diisocyanatocyclohexan, 1,6-Diisocyanato-2,2,4-trimethylhexan, 1-lsocyanatomethyl-3-isocyanato 1,5,5-trimethylcylohexan, chlorierte und bromierte Diisocyanate, phosphorhaltige Diisocyanate, Tetramethoxybutan-1,4-diisocyanat, Tetramethylen-1,4-diisocyanat, Pentamethylen-1,4-diisocyanat, Hexamethylen-1,4-diisocyanat (HDI), Phthalsäure-bis(isocyanatoethylester), Dicyclohexylmethandiisocyanat, 1,12-Diisocyanatododecan und Dimerfettsäurediisocyanat.

Als Dimerfettsäure bezeichnet man ein Gemisch von überwiegend C₃₆-Carbonsäuren, das durch thermische oder katalytische Dimerisierung ungesättigter C₁₈-Monocarbonsäuren, wie Ölsäure, Tallölfettsäure oder Linolsäure hergestellt wird. Die Dimerfettsäure läßt sich zu Dimerfettsäurediisocyanaten mit im Mittel zwei lsocyanatgruppen pro Molekül umsetzen.

Neben den niedermolekularen Polyisocyanaten können auch die kettenverlängerten Isocyanate zum Einsatz gelangen. Diese Form der Polyisocyanate ist erhältlich durch Umsetzen von etwa x mol eines bevorzugt im Mittel difunktionellen Alkohols mit etwa x+1 mol eines im Mittel difunktionellen Diisocyanats. Die Zahl der lsocyanatgruppen im Reaktionsprodukt beträgt im Mittel immer zwei, während das Molgewicht des resultierenden Diisocyanats mit zumehmendem x ansteigt. Als im Mittel difunktionelle Alkohole kommen Glycole wie Ethylenglycol, Propylenglycol, Butylenglycol und deren höhere Homologe infrage. Ebenso geeignet sind die Dimeralkohole, die durch Reduktion der Ester der Dimerfettsäure erhältlich sind. Auch solche Alkohole und Alkoholschnitte die beispielsweise durch die Umesterung von Triglyceriden mit mono-, di- oder trifunktionellen Alkoholen erzeugt werden, und die im Mttel difunktionefl sind können zur Darstellung der Verdicker eingesetzt werden. Bevorzugt werden jedoch die Addukte des Ethylenoxids und/oder des Propylenoxids an difuktionelle Alkohole wie Ethylengklycol, Propylenglycol oder Butylenglycol, wobei die Zahl der angelagerten Alkylenoxidgruppen zwischen 1 und 500, bevorzugt zwischen 10 und 200 und besonders bevorzugt zwischen 20 und 150 beträgt, zur Kettenverlängerung der lsocyanate eingesetzt. Insbesondere bevorzugt sind dabei solche Reaktionsprodukte, bei denen x = 1 oder x = 2 gewählt wurde.

Die auf diese Weise erhältlichen, kettenverlängerten Diisocyanate werden in der Regel mit monofunkionellen Polyetherpolyolen umgesetzt.
Bei diesen Polyetherpolyolen handelt es sich vozugsweise um die Addttionsprodukte von alpha-Epoxiden mit 2 bis 24 C-Atomen an monofunktionelle Alkhole mit 1 bis 24, vorzugsweise 6 bis 18 C-Atomen. Die resultierenden Polyetherpolyole können sowohl Homo- als auch Cound Mischpolymerisationsprodukte sein.

Das NCO/OH-Verhältnis liegt in der Regel zwischen etwa 0,9 und 1,1/1, wobei ein Verhältnis von etwa 1/1 bevorzugt ist.

Die Polyurethanmoleküle sind bevorzugt linear aufgebaut und weisen in der Regel ein mittleres Molekulargewicht von 5.000 bis 500.000 auf, wobei es für bestimmte Einsatzzwecke sinnvoll sein kann, das Molekulargewicht auf ein Maximum von100.000 oder 10.000 zu begrenzen.

Die zur Viskositätssenkung eingesetzten Polyether der Formel 1 können in an sich bekannter Weise durch Anlagerung von Ethylenoxid und/oder Propylenoxid an monofunktionelle Alkohole hergestellt werden. Erfindungsgemäß bevorzugt ist die Anlagerung von 1 bis 10, insbesondere bevorzugt 3 bis 7 Molekülen Ethylenoxid und/oder Propylenoxid pro Alkoholmolekül, wobei die Anlagerung im Falle gemischter Polyether blockweise oder statistisch durchgeführt werden kann.

Der in den erfindungsgemäß wirksamen Produkten im Viskositätssenker enthaltene Alkohol weist 8 C-Atome auf. Der Alkohol sollte in der Regel aliphatisch sein, wobei ungesättigte, gesättigte sowie cyclische, lineare und/oder verzweigte Alkohole, insbesondere jedoch gesättigte lineare und/oder verzweigte Alkohole verwendet werden können. Beispielhaft können dies Hexanol, Heptanol, Octanol, Nonanol, Decanol, die Isomeren des Isooctanols, wie beispielsweise das 2-Ethylhexanol sowie die verzweigten isomeren von Hexanol, Heptanol, Nonanol und Decanol sein.

Die erfindungsgemäßen Verdickungsmittelzubereitungen enthalten den entsprechenden Verdicker, den Viskositätssenker sowie Wasser und gegebenenfalls weitere Zusatzstoffe in geringen Mengen.

Erfindungsgemäß bevorzugt sind solche Verdickungsmittelzubereitungen, die im wesentlichen 1 bis 50 Gew.-% Viskositätssenker, 99 bis 10 Gew.-% organisches, wasserdispergierbares oder wasserlösliches, polymeres Verdickungsmittel sowie Wasser enthalten. In einer bevorzugten Ausführungsform enthält die Verdickungsmittelzubereitung 5 bis 20 Gew.-% Viskositätssenker, 50 bis 10 Gew.-% Verdickungsmittel sowie Wasser. Die Anteile der genannten Komponenten addieren sich in der Regel auf ungefähr 100 Gew.-%, wobei der fehlende Anteil vorzugsweise aus üblichen Zusatzstoffen besteht und 5 Gew.-%, insbesondere 2 Gew.-% nicht übersteigt. Hierzu zählen z.B. Biozide, geringe Mengen flüchtiger Lösungsmittel sowie gegebenenfalls Antioxidantien.

Bevorzugt enthält die Verdickungsmittelzubereitung ein Verdickungsmittel, das Urethangruppen aufweist.
Die erfindungsgemäßen Verdickungsmittelzubereitungen zeichnen sich dadurch aus, daß sie trotz ihrer geringen Viskosität weitgehend klare, homogene Lösungen des Verdickers im wässrigen Medium ergeben.

Ausflockungsphänomene, die in polymeren Beschichtungen zu vermindertem Glanz führen können, treten üblicherweise nicht auf. Die erfindungsgemäßen Viskositätssenker in der Verdickungsmittelzubereitung üben in der Regel keinen nachteiligen Effekt auf die Wirksamkeit des Verdickungsmittels in der Einsatzkonzentration aus. Die verdickten Produkte zeigen bei der Zubereitung unabhängig von der Anwesenheit des Viskositätssenkers ein im Vergleich nahezu identisches rheologisches Verhalten, das sich durch weitgehende Scherkraftunabhängigkeit des Verdickungseffekts auszeichnet.

Ein weiterer Gegenstand der Erfindung ist daher die Verwendung von wäßrigen Verdickungsmittelzubereitungen in Beschichtungsstoffen auf Basis wäßriger Dispersionen.

Weiterhin befaßt sich die Erfindung mit wäßrigen Dispersionsfarben, enthaltend neben Pigmenten, Bindemitteln, Lösungsmitteln und gegebenenfals weiteren Zusatzstoffen eine erfindungsgemäße Verdickungsmittelzubereitung.

Die Verdickungsmittelzubereitungen können jedoch ebenso in allen anderen wäßrigen Medien zum Einsatz kommen, in denen eine effektive Verdickung verlangt wird. Hierbei sind Produkte zum technischen Einsatz, wie beispielsweise wäßrige Hydraulikflüssigkeiten ebenso inbegriffen wie Produkte zur persönlichen- und Haushaltshygiene sowie der Kosmetik.

Die Erfindung befaßt sich außerdem mit der Verwendung von Substanzen der Formel

R¹-O-(R²-O)ₙ-H, (1)

wobei
- R¹ für einen aliphatischen Kohlenwasserstoffrest mit 8 C-Atomen,
- R² für Alkylenreste mit 2 bis 4 C-Atomen und
- n für eine ganze Zahl zwischen 3 und 7 steht,
als Viskositätssenker in wässrigen Verdickungsmittelzubereitungen.

### Beispiele

Um die viskositätssenkende Wirkung der Viskositätsregulatoren zu Überprüfen, wurde die Viskosität einer 18,2 % igen Lösung eines Verdickers auf Polyurethanbasis (NOPCO® DSX 3116, Henkel) in Wasser ohne Zusätze und mit jeweils 10 % Viskositätssenker bestimmt (Brookfield, 25°C, 20 Ulmin, Spindel 3 - 6) (Tabelle 1).

Als Viskositätssenker wurden die Addukte unterschiedlicher Mengen Ethylenoxid (EO) bzw. Propylenoxyd (PO) oder deren Mischungen an Fett- bzw. Guerbetalkohole eingesetzt.

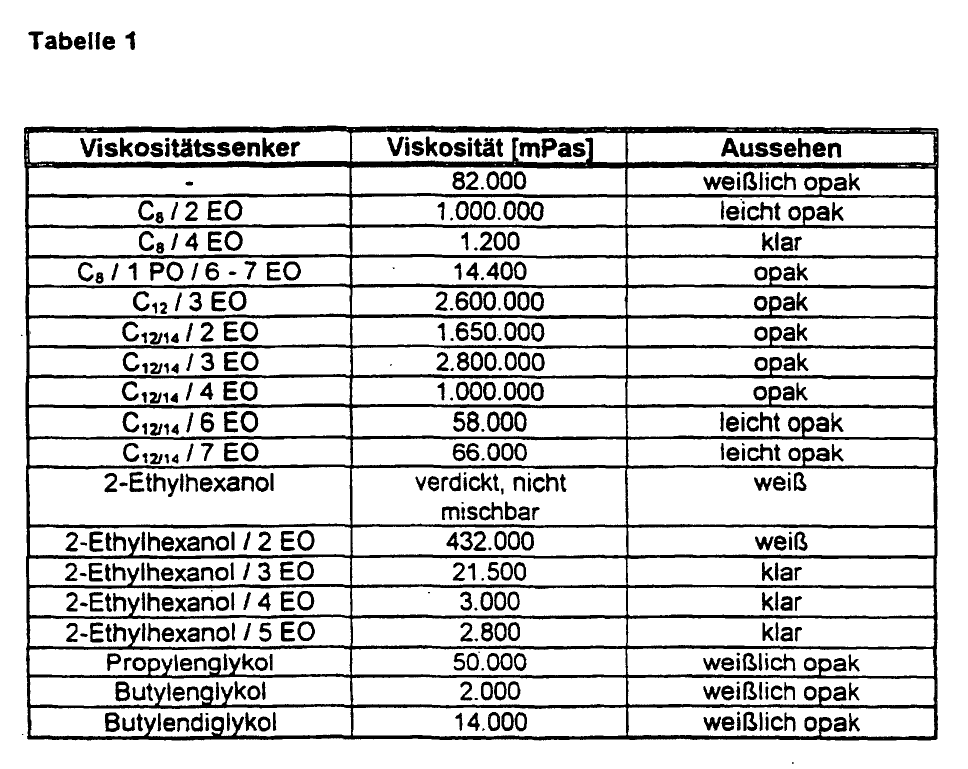

Tabelle 1 zeigt deutlich die Überlegenheit der Ethoxylate linearer und verzweigter C₈-Alkohole gegenüber den Ethoxylaten höherer Fettalkohole sowie gegenüber niedermolekularen Lösemitteln.

## Patentansprüche

1. Wäßrige Verdickungsmittelzubereitung, mindestens enthaltend ein organisches, wasserdispergierbares oder wasserlösliches, polymeres Verdickungsmittel und einen Viskositätssenker, **dadurch gekennzeichnet, daß** der Viskositätssenker wenigstens eine Verbindung der Formel
R¹-O-(R²-O)ₙ-H, (1)
wobei
- R¹ für einen aliphatischen Kohlenwasserstoffrest mit 8 C-Atomen,
- R² für Alkylenreste mit 2 bis 4 C-Atomen und
- n für eine ganze Zahl zwischen 3 und 7 steht,
umfaßt.

2. Verdickungsmittelzubereitung nach Anspruch 1, **dadurch gekennzeichnet, daß** im Wesentlichen 1 bis 50 Gew.-% Viskositätssenker, 99 bis 10 Gew.-% organisches, wasserdispergierbares oder wasserlösliches, polymeres Verdickungsmittel sowie Wasser enthalten sind.

3. Verdickungsmittelzubereitung nach einem der Ansprüche 1 oder 2, **dadurch gekennzeichnet, daß** das Verdickungsmittel Urethangruppen aufweist.

4. Verwendung von wäßrigen Verdickungsmittelzubereitungen nach einem der Ansprüche 1 bis 3 in Beschichtungsstoffen auf Basis wäßriger Dispersionen.

5. Wäßrige Dispersionsfarbe, enthaltend neben Pigmenten, Bindemitteln, Lösemitteln und gegebenenfalls weiteren Zusatzstoffen eine Verdickungsmittelzubereitung nach einem der Ansprüche 1 bis 3.

6. Verwendung von Substanzen der Formel
R¹-O-(R²-O)ₙ-H, (1)
wobei
- R¹ für einen aliphatischen Kohlenwasserstoff mit 8 C-Atomen,
- R² für Alkylenreste mit 2 bis 4 C-Atomen und
- n für eine ganze Zahl zwischen 3 und 7 steht,
als Viskositätssenker in wäßrigen Verdickungsmittelzubereitungen.

## Claims

1. An aqueous thickener formulation at least containing an organic water-dispersible or water-soluble polymeric thickener and a viscosity reducer, **characterized in that** the viscosity reducer contains at least one compound corresponding to formula (1):
R¹-O-(R²-O)ₙ-H (1)
in which
- R¹ is an aliphatic hydrocarbon radical containing 8 carbon atoms,
- R² represents alkylene radicals containing 2 to 4 carbon atoms and
- n is an integer of 3 to 7.

2. A thickener formulation as claimed in claim 1, **characterized in that** it essentially contains 1 to 90% by weight of viscosity reducer, 99 to 10% by weight of organic, water-dispersible or water-soluble polymeric thickener and water.

3. A thickener formulation as claimed in claim 1 or 2, **characterized in that** the thickener contains urethane groups.

4. The use of the aqueous thickener formulations claimed in any of claims 1 to 3 in coating compositions based on aqueous dispersions.

5. An aqueous emulsion paint containing the thickener formulation claimed in any of claims 1 to 3 in addition to pigments, binders, solvents and optionally other additives.

6. The use of compounds corresponding to formula (1):
R¹-O-(R²-O)ₙ-H (1)
in which
- R¹ is an aliphatic hydrocarbon radical containing 8 carbon atoms,
- R² represents alkylene radicals containing 2 to 4 carbon atoms and
- n is an integer of 3 to 7,
as viscosity reducers in aqueous thickener formulations.

## Revendications

1. Composition aqueuse d'épaississant, contenant au moins un épaississant organique polymère hydrosoluble ou dispersable dans l'eau et un agent abaissant la viscosité,
**caractérisée en ce que**
l'agent abaissant la viscosité comprend au moins un composé de formule
R¹-O-(R²-O)ₙ-H (1)
dans laquelle
- R¹ représente un radical hydrocarboné aliphatique ayant 8 atomes de carbone,
- R² représente des radicaux alkylène ayant de 2 à 4 atomes de carbone, et
- n représente un nombre entier compris entre 3 et 7.

2. Composition d'épaississant selon la revendication 1,
**caractérisée en ce que**
sont essentiellement contenus de 1 à 50 % en poids d'agent diminuant la viscosité, de 99 à 10 % en poids d'épaississant organique polymère hydrosoluble ou dispersable dans l'eau, ainsi que de l'eau.

3. Composition d'épaississant selon la revendication 1 ou 2,
**caractérisée en ce que**
l'épaississant comprend des groupes uréthanne.

4. Utilisation de compositions aqueuses d'épaississants selon l'une quelconque des revendications 1 à 3, dans des matières de revêtement à base de dispersions aqueuses.

5. Matière colorante en dispersion aqueuse, contenant, outre des pigments, des liants, des solvants et éventuellement d'autres additifs, une composition d'épaississant selon l'une quelconque des revendications 1 à 3.

6. Utilisation de substances de formule
R¹-O-(R²-O)ₙ-H (1)
dans laquelle
- R¹ représente un radical hydrocarboné aliphatique ayant 8 atomes de carbone,
- R² représente des radicaux alkylène ayant de 2 à 4 atomes de carbone, et
- n représente un nombre entier compris entre 3 et 7,
en tant qu'agent diminuant la viscosité dans des compositions aqueuses d'épaississants.
